# EUROPÄISCHE PATENTSCHRIFT

(11) **EP 1 894 836 B1**
(45) Veröffentlichungstag und Bekanntmachung des Hinweises auf die Patenterteilung: **02.12.2015**
(21) Anmeldenummer: 07114450.5
(22) Anmeldetag: 16.08.2007
(51) Int. Cl.: B63H 21/20, B63H 23/24, B63J 3/02, H02J 3/38

(54) **Schiff mit Elektroantrieb und Verbrennungskraftmaschinen-Zusatzantrieb**
Ship with electric propulsion and auxiliary propulsion using combustion engines
Navire doté d'un entraînement électrique et entraînement auxiliaire de moteurs à combustion interne

(30) Priorität: 01.09.2006 DE 102006041032
(43) Veröffentlichungstag der Anmeldung: 05.03.2008
(73) Patentinhaber: Siemens Aktiengesellschaft, 80333 München (DE)
(72) Erfinder: Hartig, Rainer, 21614 Buxtehude (DE); Rzadki, Wolfgang, 21509 Glinde (DE); Schmitzer, Richard, 24568 Winsen (DE); Schulze Horn, Hannes, 45966 Gladbeck (DE); Wietoska, Jens, 28201 Bremen (DE)

(56) Entgegenhaltungen:
- EP-A1- 1 426 287
- DE-U1- 29 604 437
- JP-A- 2001 270 495
- JP-U- S61 108 699

## Beschreibung

Die Erfindung betrifft ein Schiff mit einem Elektroantrieb und einem Verbrennungskraftmaschinen-Zusatzantrieb gemäß Oberbegriff des Patentanspruchs 1.

Schiffe mit einem Antriebssystem bestehend aus einem Elektroantrieb und einem Verbrennungskraftmaschinen-Zusatzantrieb werden in Zukunft insbesondere im Navy-Bereich für Korvetten und Fregatten verstärkt Anwendung finden. Hierbei dienen ein oder mehrere Elektromotoren als Hauptmaschinen zum Antrieb des Schiffes für einen unteren Geschwindigkeitsbereich (z.B. bis zu Marschfahrt) und zumindest eine Verbrennungskraftmaschine, wie z.B. eine Gasturbine oder ein oder mehrere Dieselmotoren, alleine oder mit dem (den) Elektromotor(en) als Zusatzantrieb für einen höheren Geschwindigkeitsbereich (z.B. Geschwindigkeiten größer als Marschfahrt) bis zur Höchstgeschwindigkeit.

Das Antriebssystem ist somit zu unterscheiden von dem bei großen Cargoschiffen, insbesondere bei großen Containerschiffen, eingesetzten Antriebssystemen mit einer Verbrennungskraftmaschine, üblicherweise einem großen Dieselmotor, als Hauptmaschine zum Antriebs des Schiffes und einem elektrischen Wellenmotor (in der Fachliteratur häufig als "Booster" bezeichnet) als elektrischem Zusatzantrieb zum Erreichen der Höchstgeschwindigkeit des Schiffes oder als Notantrieb bei Ausfall der Verbrennungskraftmaschine.

Ein Beispiel für ein Antriebssystem, in dem zwei Elektromotoren als Hauptmaschinen zum Antrieb des Schiffes und als Verbrennungskraftmaschinen-Zusatzantrieb eine Gasturbine verwendet wird, ist das in der Fachliteratur als CODLAG (COmbined Diesel ELectric And Gas) bezeichnete Antriebssystem. Ein CODLAG-Antriebs-system soll beispielsweise für die neuen Fregatten Klasse F 125 der deutschen Marine Verwendung finden (siehe z.B. Aufsatz "Fregatte Klasse F 125" von T. Becker in "Marineforum" 11-2005). Bis zur Marschfahrt von ca. 20 kn treiben hierbei zwei Elektromotoren jeweils eine Propellerwelle direkt ohne Getriebeuntersetzung an. Ein mechanischer Gasturbinenantrieb wird auf die beiden Propellerwellen zugeschaltet, um die Höchstgeschwindigkeit von ca. 26 kn zu erreichen.

Die Stromerzeugung für die Elektromotoren und für das Bordnetz des Schiffes erfolgt üblicherweise durch mehrere Stromerzeugungsaggregate, die jeweils aus einem Stromgenerator und einer diesen antreibenden Hilfsmaschine, wie z.B. einem mittel schnell laufenden Dieselmotor, bestehen. Aufgrund der Energieerzeugung durch eine größere Anzahl voneinander unabhängiger und auch an unterschiedlichen Stellen im Schiff angeordneter Stromerzeugungsaggregate und deren gemeinsame Vernetzung kann bereits eine sehr hohe Betriebssicherheit erzielt werden. Trotzdem ist es möglich, dass es bei einem Ausfall eines oder mehrerer Stromerzeugungsaggregate zu Störungen im Bordnetz bis hin zu einem Blackout kommen kann.

Es ist deshalb Aufgabe vorliegender Erfindung, bei einem Schiff gemäß Oberbegriff des Patentanspruchs 1 die Betriebssicherheit noch weiter zu erhöhen.

Die Lösung dieser Aufgabe gelingt dadurch, dass der zumindest eine Elektromotor auch als Generator betreibbar ist, wobei er im Generatorbetrieb zur Einspeisung elektrischer Energie in das Bordnetz über eine elektrische Leitung mit dem Bordnetz verbindbar ist. Hierdurch ist ein Energiefluss von dem Elektromotor zu dem Bordnetz herstellbar. Es kann somit von der zumindest einen Verbrennungskraftmaschine an die Wellenanlage abgegebene mechanische Energie mit Hilfe des Elektromotors im Generatorbetrieb in elektrische Energie umgewandelt und dem Bordnetz zugeführt werden. Bei einem Ausfall eines Stromerzeugungsaggregates kann somit durch Umschaltung des Elektromotors von Motorbetrieb in Generatorbetrieb das elektrische Bordnetz gestützt werden und es können Bordnetzstörungen bis hin zu einem Blackout vermieden werden.

Durch die Erfindung kann die Flexibilität in der Energieverteilung im Zusammenspiel der Energieerzeugung für den Antrieb des Schiffes und der Energieerzeugung für das Bordnetz insgesamt weiter verbessert werden. Bei Energiereserven im Antrieb bestehen eine Vielzahl neuer Möglichkeiten zu deren Nutzung: neben der bereits erläuterten Versorgung von Bordnetzverbrauchern bei Ausfall eines Stromerzeugungsaggregates besteht auch die Möglichkeit, im Fall einer Störung in der Kraftübertragung von der Verbrennungskraftmaschine zu einer Wellenanlage (z.B. bei einer Getriebestörung) den auch mit dieser Wellenanlage gekoppelten Elektromotor mit zusätzlicher Energie zu versorgen, um somit den Ausfall der Kraftübertragung der Verbrennungskraftmaschine durch eine erhöhte Antriebsleistung des Elektromotors zumindest teilweise wettzumachen und somit für sämtliche Propeller die gleiche Antriebsleistung bereitzustellen. Bei Energiereserven im Bordnetz kann die für den Elektromotor benötigte zusätzliche Energie auch von den Stromgeneratoren des Bordnetzes bereitgestellt werden. Insgesamt kann somit die Betriebssicherheit des Antriebssystems und des Bordnetzes noch weiter erhöht werden.

Außerdem kann mit Hilfe eines Energieflusses von der Verbrennungskraftmaschine zu dem Bordnetz der Betriebspunkt des Gesamtsystems bestehend aus Verbrennungskraftmaschine und Hilfsmaschinen zum Antrieb der Stromgeneratoren optimiert werden, z.B. hinsichtlich geringsten Kraft-/Treibstoffverbrauchs, geringster Emissionen oder optimaler Laufzeiten.

Gemäß einer besonders vorteilhaften Ausgestaltung der Erfindung weist das Schiff einen in die elektrische Leitung geschalteten Umrichter auf, der den Elektromotor im Motorbetrieb mit elektrischer Energie aus dem Bordnetz versorgt und den von dem Elektromotor im Generatorbetrieb erzeugten Strom in einen Strom mit der Frequenz des Bordnetzes umwandelt. Hierdurch kann der Energiefluss zwischen Elektromotor und Bordnetz in seiner Richtung und Größe genau gesteuert und somit die Energiezufuhr zu dem Elektromotor bei Motorbetrieb bzw. zu dem Bordnetz bei Generatorbetrieb bedarfsgerecht erfolgen.

Zur weiteren Erhöhung der Betriebssicherheit kann der Umrichter ein Steuer- und Regelsystem aufweisen, durch das der Elektromotor über den Umrichter so schnell von Motorbetrieb in Generatorbetrieb umschaltbar ist, dass bei einem Ausfall eines Generators die elektrische Bordnetzenergie ohne Blackout des Bordnetzes, vorzugsweise sogar unterbrechungsfrei, aufrecht erhaltbar ist.

Um Netzeinbrüche sicher zu vermeiden, kann eine zusätzliche Energiequelle vorgesehen werden, die während der Umschaltung des Elektromotors von Motorbetrieb zu Generatorbetrieb zur Aufrechterhaltung der Bordnetzenergie elektrische Energie in das Bordnetz einspeist.

Bevorzugt ist hierbei die Zeit für die Umschaltung des Elektromotors von Motorbetrieb in Generatorbetrieb und die Dimensionierung der Energiequelle hinsichtlich der in der Zeit der Umschaltung in das Bordnetz einspeisbaren Energie derart aufeinander abgestimmt, dass aufgrund der während der Umschaltung in das Bordnetz eingespeisten Energie die Spannung und Frequenz des Bordnetzes einen jeweils vorgegebenen Grenzwert nicht unterschreiten. Durch eine Wahl geeigneter Grenzwerte für die Spannung und Frequenz des Bordnetzes können Netzstörungen sicher vermieden werden. Insbesondere kann gezielt die Funktionsbereitschaft für den Schiffsbetrieb kritischer Verbraucher an Bord des Schiffes gewährleistet und somit ein Blackout des Schiffes vermieden werden.

Gemäß einer vorteilhaften Ausgestaltung ist der Umrichter als Gleichstrom-Zwischenkreis-Umrichter ausgebildet und die Energiequelle ist eine rotierende Blindleistungsmaschine zur Erzeugung von Blindleistung für das Bordnetz. Die für die Blindleistungserzeugung im Fall eines derartigen Umrichters üblicherweise ohnehin notwendige Blindleistungsmaschine wird somit für die Stützung des Bordnetzes verwendet. Zusätzlicher Platzbedarf für eine weitere zusätzliche Energiequelle wird somit vermieden.

Gemäß einer alternativen Ausgestaltung ist der Umrichter als Gleichspannungs-Zwischenkreis-Umrichter ausgebildet und die Energiequelle ist ein Zwischenkreiskondensator des Gleichspannungs-Zwischenkreises. Auch hier wird der für den Umrichterbetrieb, insbesondere auch für dessen Blindleistungsabgabe, ohnehin notwendige und somit bereits vorhandene Zwischenkreiskondensator für die Stützung des Bordnetzes bei Ausfall eines Stromerzeugungsaggregates verwendet. Zusätzlicher Platzbedarf für eine weitere zusätzliche Energiequelle wird somit vermieden.

Eine besonders schnelle Umschaltung des Elektromotors von Motorbetrieb zu Generatorbetrieb ist dadurch möglich, dass der Umrichter einen netzseitigen und einen motorseitigen Stromrichter mit jeweils steuerbaren Stromrichterventilen aufweist und die Umschaltung von Motorbetrieb in Generatorbetrieb durch Änderung der Einschaltdauer der Stromrichterventile erfolgt.

Bevorzugt sind der Elektromotor, der Umrichter und das Steuer- und Regelsystem des Umrichters derart ausgebildet, dass der Elektromotor innerhalb von weniger als einer Sekunde von Motorbetrieb nach Generatorbetrieb umschaltbar ist. Vorzugsweise ist die Umschaltung sogar innerhalb von weniger als 500 ms möglich, da meist nach 500 ms die Leistungsschalter öffnen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigt:
- FIG 1: eine schematische Darstellung eines Schiffes gemäß einer ersten vorteilhaften Ausgestaltung der Erfindung
- FIG 2: ein Beispiel für einen Aufbau des Steuer- und Regelsystems von FIG 1,
- FIG 3: ein Beispiel für einen Verfahrensablauf zur Umschaltung eines Elektromotors von Motor- zu Generatorbetrieb und
- FIG 4: eine schematische Darstellung eines Schiffes gemäß einer zweiten vorteilhaften Ausgestaltung der Erfindung.

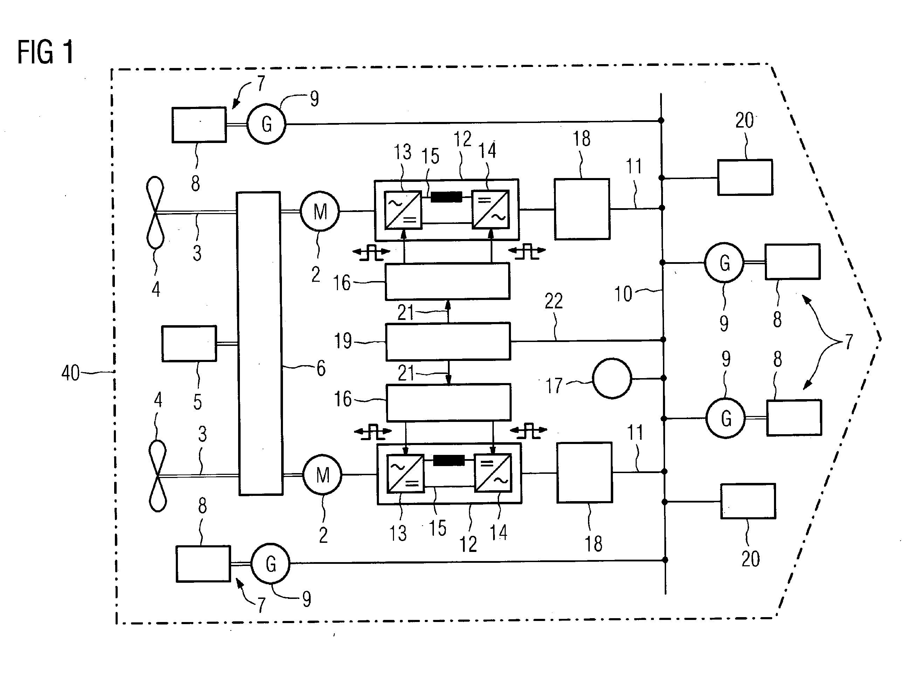

Ein in FIG 1 gezeigtes Schiff 1, beispielsweise eine Fregatte oder eine Korvette, weist ein Antriebssystem mit zwei Elektromotoren 2 auf, von denen jeder direkt ohne ein zwischengeschaltetes Getriebe jeweils eine Propellerwelle 3 antreibt, die wiederum mit einem verstellbaren Schiffspropeller 4 gekoppelt ist. Die Elektromotoren 2 dienen als Hauptantrieb für den Vortrieb des Schiffes 1 im unteren Geschwindigkeitsbereich (z.B. Geschwindigkeiten bis einschließlich Marschfahrt). Eine Gasturbine 5 dient alleine oder mit dem Elektromotoren 2 als Zusatzantrieb für den höheren Geschwindigkeitsbereich (z.B. Geschwindigkeiten größer als Marschfahrt) bis zur Erreichung der Höchstgeschwindigkeit. Die Gasturbine 5 kann bei Bedarf über eine Getriebe-/Kupplungseinheit 6 mechanisch mit den Propellerwellen 3 gekuppelt werden.

Ein Bordnetz 10 dient zur Versorgung der Elektromotoren 2 sowie weiterer elektrischer Verbraucher 20 (z.B. Querstrahlruder, Beleuchtung, Navigationssysteme) mit elektrischer Energie. Aus Gründen der Übersichtlichkeit sind in FIG 1 nur einige wenige elektrische Verbraucher 20 dargestellt, in der Praxis werden eine größere Anzahl derartiger Verbraucher 20, teilweise auch über weitere Bordnetze, aus dem Bordnetz 10 mit elektrischer Energie versorgt.

Die Erzeugung der elektrischen Energie für das Bordnetz 10 und somit auch für die Elektromotoren 2 erfolgt durch mehrere Stromerzeugungsaggregate 7, die jeweils aus einem Dieselmotor 8 und einem von dem Dieselmotor 8 angetriebenen Stromgenerator 9 bestehen. Als Dieselmotoren 8 kommen beispielsweise mittel schnell laufende Viertakt-Dieselmotoren zum Einsatz.

Die Elektromotoren 2 können alternativ statt über das Bordnetz 10 auch direkt von einem oder mehreren der Stromerzeugungsaggregaten 7 mit elektrischer Energie versorgt werden.

Bei einer Fregatte beträgt beispielsweise die Leistung der Stromerzeugungsaggregate 7 jeweils etwa 3 MW, so dass insgesamt eine Generatorleistung von 12 MW für die elektrischen Verbraucher 20 und die Elektromotoren 2 zur Verfügung steht. Der Leistungsbedarf der elektrischen Verbraucher beträgt etwa 1 MW. Die Elektromotoren 2 sind auf eine Leistung von jeweils etwa 4.5 MW ausgelegt, so dass die Gesamtleistung des Elektroantriebs 9 MW beträgt. Die Gasturbine 5 hat eine Leistung von typischerweise 20 MW. Da die maximale Leistung der Gasturbine 5 nur im Bereich der eher selten gefahrenen Höchstgeschwindigkeit beansprucht wird, stehen bei den häufiger vorkommenden Geschwindigkeiten bis einschließlich Marschfahrt aufgrund der dann noch bestehenden großen Leistungsreserven der Gasturbine 5 große Leistungsreserven auf der Antriebsseite zur Verfügung. Durch die Nutzung dieser Leistungsreserven ergibt sich der weitere Vorteil, dass die Gasturbine mit einem besseren Wirkungsgrad betrieben werden kann.

Jeder der Elektromotoren 2 ist sowohl im Motorbetrieb als auch im Generatorbetrieb betreibbar. Jeder der Elektromotoren 2 ist zudem über eine elektrische Leitung 11 und jeweils einem in die Leitung 11 geschalteten Umrichter 12 und Transformator 18 mit dem Bordnetz 10 verbindbar. Im Motorbetrieb versorgt der Umrichter 12 den Elektromotor 2 mit drehzahlvariabler elektrischer Energie aus dem Bordnetz 10. Es handelt sich somit um einen in der Fachliteratur als "variable speed drive" bezeichneten Antrieb. Im Generatorbetrieb wandelt der Umrichter 12 den von dem Elektromotor 2 erzeugten Strom in Strom mit der Frequenz des Bordnetzes 10 um.

Über den Umrichter 12 kann somit der elektrische Energiefluss zwischen dem Elektromotor 2 in seiner Richtung und Größe gesteuert und somit dem Elektromotor im Motorbetrieb bedarfsgerecht elektrische Energie aus dem Bordnetz 10 zugeführt bzw. von dem Elektromotor im Generatorbetrieb erzeugte elektrische Energie bedarfsgerecht in dieses Bordnetz 10 eingespeist werden. Im Motorbetrieb eines Elektromotors wird dann elektrische Energie aus dem Bordnetz 10 in drehzahlvariable mechanische Energie zum Antrieb des zugehörigen Schiffspropellers 4 umgewandelt. Leistungsreserven im Bordnetz 10 können somit zur Vergrößerung der Antriebsleistung des Schiffes verwendet werden, wodurch entweder die Schiffsgeschwindigkeit erhöht oder bei gleich bleibender Schiffsgeschwindigkeit die Gasturbine 5 entlastet werden kann. Im Generatorbetrieb kann mechanische Energie der Propellerwelle 3 in elektrische Energie für das Bordnetz 10 umgewandelt werden. Hierdurch können Leistungsreserven der Gasturbine 5 zur Erzeugung von Energie für das Bordnetz 10 oder einen anderen Elektromotor zum Antrieb des Schiffes (z.B. im Fall einer Getriebestörung) verwendet werden.

Der Umrichter 13 ist als Gleichstrom-Zwischenkreisumrichter ausgebildet und besteht aus einem motorseitigen Stromrichter 13, einem netzseitigen Stromrichter 14 und einem dazwischen geschalteten Gleichstrom-Zwischenkreis 15.

Ein gegebenenfalls notwendiger Erregerstrom für den Elektromotor 2 kann ebenfalls aus dem Bordnetz 10 bezogen und über einen nicht näher dargestellten, mit dem elektrischen Bordnetz verbundenen Erregerstromrichter gesteuert und geregelt werden.

Die Steuerung und Regelung der Elektromotoren 2 über die Umrichter 12 erfolgt durch jeweils ein, vorzugsweise in Digitaltechnik ausgeführtes, Steuer- und Regelsystem 16. Die Stromrichter 13 und 14 sind hierbei durch die jeweiligen Steuer- und Regelsysteme 16 unabhängig voneinander steuerbar und regelbar. Hierfür erfasst ein jedes der Steuer- und Regelsysteme 16 über nicht näher dargestellte Messeinrichtungen die Drehzahl des zugehörigen Elektromotors/-generators, Motorspannung, Motorfrequenz und Zwischenkreisstrom des zugehörigen Umrichters 12 sowie die Bordnetzspannung und Bordnetzfrequenz. Die Stromrichter 13, 14 weisen jeweils steuerbare Stromrichterventile auf und das Steuer- und Regelsystem 16 schaltet den Elektromotor 2 durch Änderung der Einschaltdauer der Stromrichterventile von Motorbetrieb in Generatorbetrieb um.

Da ein Gleichstrom-Zwischenkreis-Umrichter nur Wirkleistung in das Bordnetz 10 einspeisen kann, wird der Blindleistungsbedarf des Bordnetzes 10 von einer als Synchrongenerator ausgebildeten Blindleistungsmaschine 17 bereitgestellt. Die Blindleistungsmaschine 17 arbeitet im Normalbetrieb nur als Phasenschieber und speist keine Wirkleistung in das Netz 10 ein.

Ein ungeplanter Ausfall eines oder mehrerer der Stromerzeugungsaggregate 7 könnte zu einem Einbruch der Spannung und Frequenz des Bordnetzes 5 mit der Folge einer Sicherheitsabschaltung elektrischer Verbraucher 20 bis hin zu einem Blackout des Schiffes 1 führen. Auch falls Reserve-Stromerzeugungsaggregate vorhanden sind, dauert es einige Sekunden, bis diese gestartet sind und zur Energieversorgung für das Netz 10 zur Verfügung stehen.

Um derartige Bordnetzeinbrüche zu vermeiden, ist der Elektromotor 2 durch das Steuer- und Regelsystem 16 so schnell von Motorbetrieb in Generatorbetrieb umschaltbar, dass die Bordnetzenergie ohne Blackout des Bordnetzes 10, vorzugsweise sogar völlig unterbrechungsfrei, aufrecht erhaltbar ist. Während der Umschaltung von Motor- zu Generatorbetrieb speist die Blindleistungsmaschine 17 zur Aufrechterhaltung der Bordnetzenergie elektrische Energie in das Bordnetz 10 ein. Der Energiebedarf des Netzes 10 wird somit aus der kinetischen Rotationsenergie der Blindleistungsmaschine 17 gedeckt.

Die Zeit für die Umschaltung des Elektromotors von Motorbetrieb in Generatorbetrieb und die Dimensionierung der Blindleistungsmaschine 17 hinsichtlich der in der Zeit der Umschaltung in das Bordnetz 10 einspeisbaren Energie sind derart aufeinander abgestimmt sind, dass aufgrund der während der Umschaltung in das Bordnetz 10 eingespeisten Energie die Spannung und Frequenz des Bordnetzes 10 einen jeweils vorgegebenen Grenzwert nicht unterschreiten. Die Grenzwerte sind hierbei so gewählt, dass eine Sicherheitsabschaltung kritischer Schiffsverbraucher 20, die zu einem Blackout des Schiffes 1 führen könnten, vermieden wird.

Bevorzugt sind der Elektromotor 2, der Umrichter 12 und das Steuer- und Regelsystem 16 des Umrichters 12 derart ausgebildet, dass der Elektromotor 2 innerhalb weniger als 1 Sekunde von Motorbetrieb nach Generatorbetrieb umschaltbar ist. Hierdurch kann der Energiebedarf aus der Blindleistungsmaschine 17 so klein gehalten werden, dass bei einer normalen, auf die Blindleistungserzeugung ausgerichteten Dimensionierung der Blindleistungsmaschine 17 auch ausreichend Rotationsenergie für die Stützung des Bordnetzes 10 bereit steht.

Zur Erfassung einer Störung eines oder mehrere Stromerzeugungsaggregate 7 ist eine Überwachungseinrichtung 19 vorgesehen, die über Signalleitungen 22, von denen beispielhaft nur eine einzige dargestellt ist, Störungen erfasst und im Störungsfall über Steuerleitungen 21 einen Umschaltbefehl an die Steuer- und Regelsysteme 16 gibt. Die Überwachungseinrichtung 19 ist bevorzugt in Hardware ausgebildet, um zeitliche Verzögerungen in der Signalverarbeitung zu vermeiden.

Bei einem Motorbetrieb der Elektromotoren 2 wäre ein Betrieb der Blindleistungsmaschine 17 eigentlich nicht notwendig und sie könnte abgeschaltet werden. Allerdings stände dann auch deren kinetische Rotationsenergie für die Stützung des Bordnetzes 10 bei einem Ausfall eines oder mehrerer Stromerzeugungsaggregate 7 nicht zur Verfügung. Die Blindleistungsmaschine 17 wird somit auch im Motorbetrieb der Elektromotoren 2 betrieben.

Eine kurze Umschaltzeit ist dadurch erzielbar, dass die Ansteuerung der Stromrichter 13, 14 bei der Umschaltung von Motorbetrieb zu Generatorbetrieb ohne Impulsabschaltungen, d.h. alleine durch Veränderung der Einschaltzeitpunkte und somit Einschaltdauern der Stromrichterventile erfolgt. Bei Verwendung von Thyristoren als Stromrichterventilen werden hierbei üblicherweise nur die Einschaltzeitpunkte über den so genannten Steuerwinkel α gesteuert. Bei Verwendung von GTOs, IGBTs oder IGCTs können sowohl die Einschalt- als auch die Ausschaltzeitpunkte gesteuert werden.

Eine derartige Ansteuerung der Stromrichterventile ohne Impulsabschaltung ist dadurch möglich, dass ein gemeinsames Steuer- und Regelsystem für Motor- und Generatorbetrieb vorhanden ist. Impulsabschaltungen beim Übergang vom Motorbetrieb zu Generatorbetrieb und die damit einhergehenden Verzögerungen, wie sie bei unterschiedlichen Regelungssystemen für Motor- und Generatorbetrieb notwendig wären, können dadurch vermieden werden.

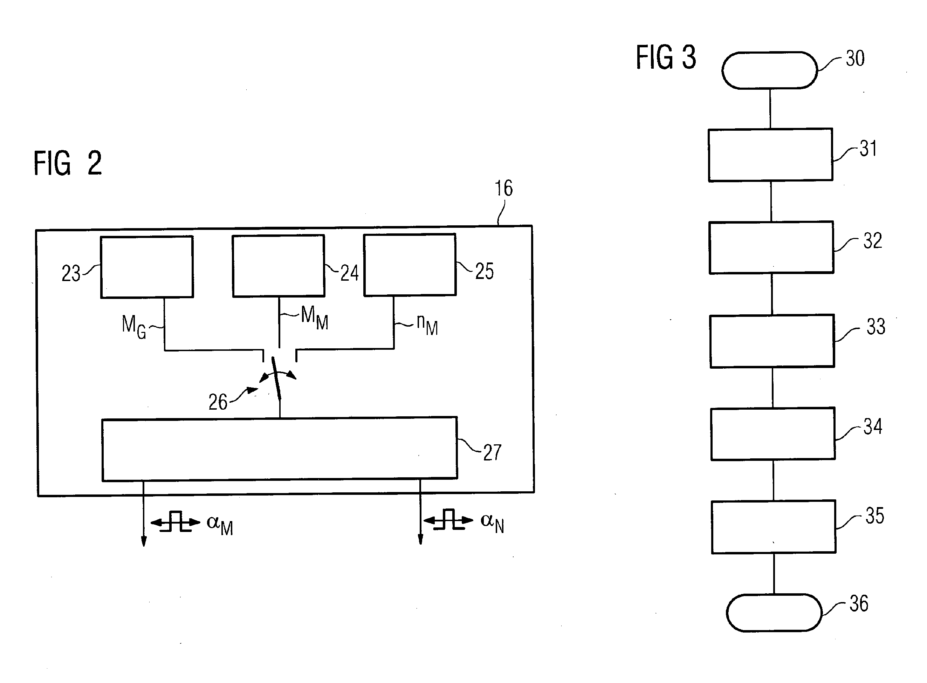

Vorteilhaft wird der Elektromotor 2 im Motorbetrieb drehzahlgeregelt, wenn kein Verbrennungskraftmaschinen-Zusatzantrieb zugeschaltet ist, d.h. wenn die Gasturbine 5 nicht mit der Propellerwelle 3 gekuppelt ist. Ist dagegen im Motorbetrieb der Verbrennungskraftmaschinen-Zusatzantrieb zugeschaltet ist, d.h. die Gasturbine 5 ist mit der Propellerwelle 3 gekuppelt, dann wird der Elektromotor 2 drehmoment- und die Gasturbine 5 drehzahlgeregelt. Auch im Generatorbetrieb wird der Elektromotor 2 drehmomentgeregelt.. Das Steuer- und Regelsystem 16 weist dann gemäß FIG 2 zum einen eine Regelungskomponente 23 zur Erzeugung eines Drehmomenten-Sollwertes M_{G} im Generatorbetrieb, eine Regelungskomponente 24 zur Erzeugung eines Drehmomenten-Sollwertes M_{M} für den Motorbetrieb mit Verbrennungskraftmaschinen-Zusatzantrieb und eine Regelungskomponente 25 zur Erzeugung eines Drehzahl-Sollwertes n_{M} für den Motorbetrieb ohne Verbrennungskraftmaschinen-Zusatzantrieb auf, wobei durch eine Art Umschaltung 26 sichergestellt wird, dass nur einer der drei Sollwerte auf eine nachfolgende Steuerungskomponente 27 für die Ansteuerung des Umrichters 12 im Generator- und im Motorbetrieb geschaltet ist. Die Regelungskomponenten 23, 24, 25, die Umschaltung 26 und die Steuerungskomponente 27 sind vorzugsweise als Funktionsbausteine in einer Software realisiert.

Unter Bezugnahme auf FIG 3 soll im Folgenden für den Fall, dass in den Stromrichtern 13 und 14 Thyristoren als Stromrichterventile verwendet werden, ein möglicher Umschaltvorgang von Motor- zu Generatorbetrieb erläutert werden. Die Einschaltdauern der Stromrichterventile der Stromrichter 13 und 14 und damit die Umschaltung von Motor- auf Generatorbetrieb werden dabei über die jeweiligen Steuerwinkel α_{M} und α_{N} (siehe Fig. 2) gesteuert. Der Stromfluss durch die Thyristoren hängt von deren Zündzeitpunkten ab. Der Steuerwinkel gibt an, um wie viel Grad der tatsächliche Zündzeitpunkt des Thyristors gegenüber einer Zündung im natürlichen Kommutierungspunkt der Spannung verschoben ist. Durch Steuerung des Steuerwinkels kann der Stromfluss durch den Stromrichter und somit Strom und Spannung auf der Stromrichterausgangsseite gesteuert werden.

Ausgangspunkt ist ein Betrieb des Schiffes in einem höheren Geschwindigkeitsbereich, d.h. die Propellerwellen 3 werden sowohl durch die Gasturbine 5 als auch durch die im Motorbetrieb betriebenen Elektromotoren 2 angetrieben. Die Elektromotoren 2 werden hierbei von den Steuer- und Regelsystemen 16 drehmomentgeregelt und die Gasturbine 5 über ein nicht näher dargestelltes Steuer- und Regelsystem drehzahlgeregelt. Kommt es nun zu einem Störungsereignis 30, z.B. einem Ausfall eines oder mehrerer Stromerzeugungsaggregate 7, so wird die Störung in einem ersten Schritt 31 von der Überwachungseinrichtung 19 erfasst und durch die Überwachungseinrichtung 19 unter Umgehung eines Power Management Systems der Leistungsbedarf des Bordnetzes 10 durch Abschaltung unkritischer Verbraucher 20 gesenkt. Zum anderen signalisiert die Überwachungseinrichtung 19 über die Steuerleitungen 21 an die Steuer- und Regelsysteme 16 eine Umschaltung der Elektromotoren 2 von Motor- in Generatorbetrieb.

Für die Umschaltung wird von jedem der Steuer- und Regelsysteme 16 in einem Schritt 32 der jeweils zugehörige netzseitig Stromrichter 14 derart angesteuert, dass der Stromfluss aus dem Netz 10 in den Stromrichter 14 schnellstmöglich unterbunden und somit auch der Bedarf an elektrischer Leistung aus dem Bordnetz 10 weiter gesenkt wird. Hierfür senkt die Regelungskomponente 24 für den Motorbetrieb den Momentensollwert M_{M} augenblicklich auf Null, wodurch der Steuerwinkel α_{N} für die Ansteuerung der Ventile des Stromrichters 14 bis maximal 90° vergrößert wird.

Insgesamt wird durch diese Maßnahmen der Leistungsbedarf des Bordnetzes 10 auf einen minimalen Wert gesenkt. Außerdem wird der Momentanwert der Netzfrequenz als Sollwert für den späteren Generatorbetrieb in dem Steuer- und Regelsystem 16 abgespeichert.

Falls der Elektromotor 2 im Motorbetrieb nicht im Feldschwächebereich betrieben wurde, ist die Motorspannung bereits klein genug, um ein Wechselrichterkippen im Umrichter 12 zu vermeiden.

Falls der Elektromotor 2 im Motorbetrieb im Feldschwächebereich betrieben wurde, wird in einem nächsten Schritt 33 durch eine geeignete Ansteuerung des nicht näher dargestellten Erregerstromrichters über den Erregungsstrom die Motorspannung soweit reduziert, dass die Gefahr eines Wechselrichterkippens der Thyristoren des Umrichters 12 vermieden wird. Die Zeit bis die Erregung des Elektromotors 2 auf den für den Generatorbetrieb angestrebten Wert reduziert ist, kann dadurch verkleinert werden, dass der Erregerstromrichter derart angesteuert wird, dass der Erregerstrom zuerst auf einen Wert abgesenkt wird, der kleiner ist als der tatsächlich für den Generatorbetrieb angestrebte Wert, und anschließend auf den angestrebten Wert angehoben wird.

In einem nächsten Schritt 34 wird durch das Steuer- und Regelsystem 16 der motorseitige Stromrichter 13 derart angesteuert, dass sich die Energieflussrichtung durch den Stromrichter 13 umkehrt, d.h. dass der Stromrichter 13 Energie von dem Elektromotor 2 aufnimmt, in einen Gleichstrom umwandelt und dem Gleichstromzwischenkreis des Umrichters 12 zuführt. Dies geschieht durch Verkleinerung des Steuerwinkels α_{M} für die Ansteuerung der Ventile des Stromrichters 13. Der Elektromotor 2 geht nun von motorischen in generatorischen Betrieb.

In einem nächsten Schritt 35 wird durch das Steuer- und Regelsystem 16 der netzseitige Stromrichter 14 derart angesteuert, dass er die dem Gleichstromzwischenkreis 15 vom Stromrichter 13 zugeführte Energie in einen Strom mit der Frequenz des Bordnetzes 5 umwandelt und in das Netz 10 einspeist. Dies geschieht dadurch, dass der Steuerwinkel α_{N} für die Ansteuerung der Ventile des Stromrichters 14 vergrößert wird.

Der Umrichter 12 wandelt nun den motorseitigen Strom mit von der Drehzahl der Gasturbine 5 bzw. der Propellerwelle 3 abhängiger und somit vom Bordnetz 10 unterschiedlicher Frequenz in einen Strom mit der Frequenz des Bordnetzes 10 um. Die Frequenz der Netzspannung wird dabei von den Steuer- und Regelsystemen 16 auf ihren Momentanwert im Bordnetz 10 vor Beginn der Umschaltung geregelt. Somit ist das Ende 36 des Umschaltvorganges erreicht.

Statt eines Gleichstrom-Zwischenkreisumrichters 12 kann grundsätzlich auch ein Gleichspannungs-Zwischenkreisumrichter verwendet werden. In diesem Fall wird der Blindleistungsbedarf des Bordnetzes 10 durch den Umrichter selbst gedeckt, so dass eine gesonderte Blindleistungsmaschine nicht notwendig ist.

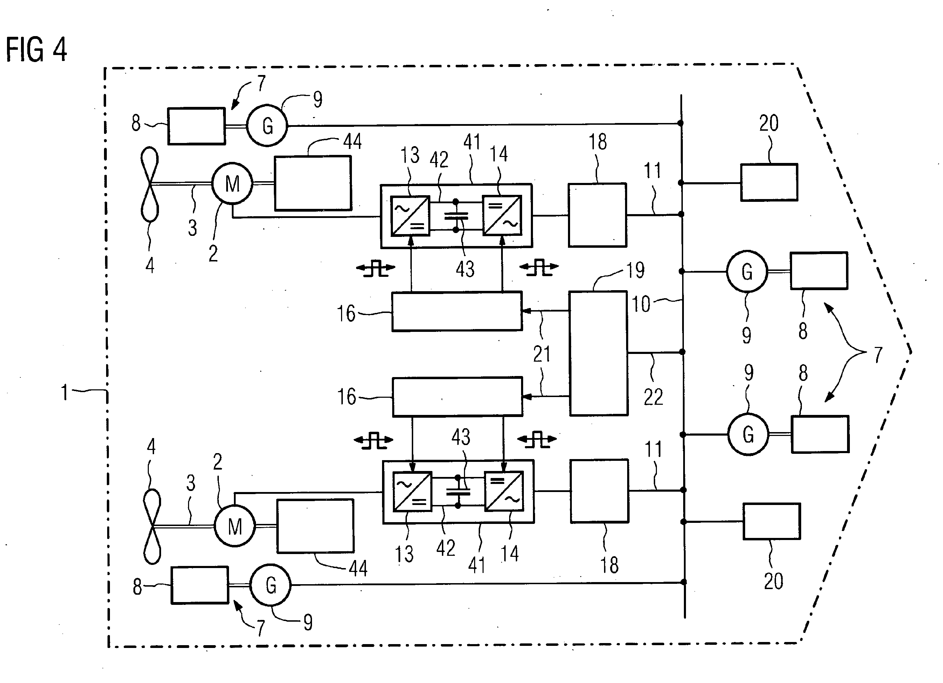

FIG 4 zeigt hierfür ein Schiff 40, das dem Schiff 1 aus FIG 1 entspricht, mit der Ausnahme, dass der Gleichstrom-Zwischenkreisumrichter durch einen Gleichspannungs-Zwischenkreisumrichter 41 mit einem Gleichspannungs-Zwischenkreis 42 mit einem Zwischenkreiskondensator 43 ersetzt wurde und die Blindleistungsmaschine entfallen ist. Weiterhin sind als Zusatzantrieb statt einer Gasturbine nun zwei Dieselmotoren 44 vorhanden, von denen jeweils einer direkt mit einer der Propellerwellen 3 kuppelbar ist.

Während der Umschaltung von Motor- zu Generatorbetrieb steht der Zwischenkreiskondensator 43 als Energiespeicher zur Verfügung und der Umrichter 41 speist elektrische Energie in das Bordnetz 10 ein, derart, dass die Spannung und die Frequenz des Bordnetzes 10 jeweils vorgegebene Grenzwerte nicht unterschreiten. Die Zeit für die Umschaltung von Motorbetrieb in Generatorbetrieb und die Dimensionierung des Zwischenkreiskondensators 43 hinsichtlich der in der Zeit der Umschaltung in das Bordnetz 10 einspeisbaren Energie sind hierzu aufeinander abgestimmt.

Im erläuterten Fall von Stromrichtern mit Thyristor-Stromrichterventilen und deren Steuerung über den Steuerwinkel α können Umschaltzeiten von weniger als 1 Sekunde erzielt werden.

Werden sowohl hinsichtlich der Ein- als auch hinsichtlich der Ausschaltung steuerbare Stromrichterventile, z.B. IGBT-Stromrichterventile verwendet, kann deren Steuerung statt über den Steuerwinkel über ein Pulsmuster erfolgen (PWM-Modulation). In diesem Fall erfolgt die Sperrung des Stromflusses vom Netz in den netzseitigen Stromrichter, die Umkehr der Energierichtung im motorseitigen Stromrichter und die Energieeinspeisung in das Bordnetz mit der Netzfrequenz durch den netzseitigen Stromrichter jeweils durch Änderungen der Pulsmuster der Stromrichter. Hierdurch sind sogar Umschaltzeiten im Bereich von deutlich weniger als 1 s möglich.

## Patentansprüche

1. Schiff (1) mit
- zumindest einem Elektromotor (2) als Hauptmaschine zum Antrieb des Schiffes, wobei der Elektromotor (2) eine Wellenanlage (3) antreibt, die mit einem Schiffspropeller (3) gekuppelt ist,
- zumindest einer mit der Wellenanlage (3) kuppelbaren Verbrennungskraftmaschine (5), insbesondere eine Gasturbine oder ein oder mehrere Dieselmotoren, als Zusatzantrieb zur Erreichung der Höchstgeschwindigkeit des Schiffes (1),
- einem Bordnetz (10) zur Versorgung elektrischer Verbraucher (20) des Schiffes mit elektrischer Energie und
- Generatoren (9) zur Erzeugung elektrischer Energie für den zumindest einen Elektromotor (2) und für das Bordnetz (10)
**dadurch gekennzeichnet, dass** der zumindest eine Elektromotor (2) auch als Generator betreibbar ist, wobei er im Generatorbetrieb zur Einspeisung elektrischer Energie in das Bordnetz über eine elektrische Leitung (11) mit dem Bordnetz (10) verbindbar ist.

2. Schiff (1) nach Anspruch 1,
**gekennzeichnet durch** einen in die elektrische Leitung (11) geschalteten Umrichter (12), der den Elektromotor (2) im Motorbetrieb mit von den Generatoren (9) erzeugter elektrischer Energie versorgt und den von dem Elektromotor (2) im Generatorbetrieb erzeugten elektrischen Strom in einen Strom mit der Frequenz des Bordnetzes (10) umwandelt.

3. Schiff (1) nach Anspruch 2,
**dadurch gekennzeichnet, dass** der Umrichter (12) ein Steuer- und Regelsystem (16) aufweist, durch das der Elektromotor (2) über den Umrichter (12) so schnell von Motorbetrieb in Generatorbetrieb umschaltbar ist, dass bei einem Ausfall eines Generators (9) die elektrische Bordnetzenergie ohne Blackout des Bordnetzes (10), vorzugsweise unterbrechungsfrei, aufrechterhaltbar ist.

4. Schiff (1) nach Anspruch 3,
**gekennzeichnet durch** eine zusätzliche Energiequelle (17), die während der Umschaltung des Elektromotors (2) von Motorbetrieb zu Generatorbetrieb zur Aufrechterhaltung der Bordnetzenergie elektrische Energie in das Bordnetz (10) einspeist.

5. Schiff (1) nach Anspruch 4,
**dadurch gekennzeichnet, dass** die Zeit für die Umschaltung des Elektromotors (2) von Motorbetrieb in Generatorbetrieb und die Dimensionierung der Energiequelle (17) hinsichtlich der in der Zeit der Umschaltung in das Bordnetz (10) einspeisbaren Energie derart aufeinander abgestimmt sind, dass aufgrund der während der Umschaltung in das Bordnetz (10) eingespeisten Energie die Spannung und Frequenz des Bordnetzes (10) einen jeweils vorgegebenen Grenzwert nicht unterschreiten.

6. Schiff (1) nach Anspruch 4 oder 5,
**dadurch gekennzeichnet, dass** der Umrichter als Gleichstrom-Zwischenkreis-Umrichter (12) ausgebildet ist und die Energiequelle eine rotierende Blindleistungsmaschine (17) zur Erzeugung von Blindleistung für das Bordnetz (10) ist.

7. Schiff (1) nach Anspruch 4 oder 5,
**dadurch gekennzeichnet, dass** der Umrichter als Gleichspannungs-Zwischenkreis-Umrichter (41) ausgebildet ist und die Energiequelle ein Zwischenkreiskondensator (43) des Gleichspannungs-Zwischenkreises (42) ist.

8. Schiff (1) nach einem der Ansprüche 2 bis 7,
**dadurch gekennzeichnet, dass** der Umrichter (12) einen netzseitigen und einen motorseitigen Stromrichter (13, 14) mit jeweils steuerbaren Stromrichterventilen aufweist und das Steuer- und Regelsystem (16) den Elektromotor (2) durch Änderung der Einschaltdauer der Stromrichterventile von Motorbetrieb in Generatorbetrieb umschaltet.

9. Schiff (1) nach einem der Ansprüche 3 bis 8,
**dadurch gekennzeichnet, dass** es ein gemeinsames Steuer- und Regelsystem (16)) für den Motorbetrieb und Generatorbetrieb des Elektromotors (2) aufweist.

10. Schiff (1) nach einem der Ansprüche 3 bis 9,
**dadurch gekennzeichnet, dass** der Elektromotor (2), der Umrichter (12) und das Steuer- und Regelsystem (16) des Umrichters (12) derart ausgebildet sind, dass der Elektromotor (2) innerhalb weniger als 1 Sekunde, vorzugsweise innerhalb weniger als 500 ms, von Motorbetrieb nach Generatorbetrieb umschaltbar ist.

11. Schiff (1) nach einem der vorhergehenden Ansprüche,
**dadurch gekennzeichnet, dass** es als Fregatte oder Korvette ausgebildet ist.

## Claims

1. Ship (1) with
- at least one electric motor (2) as a main engine for propelling the ship (1), wherein the electric motor (2) propels a shaft system (3) which is coupled to a ship propeller (3),
- at least one combustion engine (5) which can be coupled to the shaft system (3), in particular a gas turbine or one or a number of diesel engines, as auxiliary propulsion in order to reach the maximum speed of the ship (1),
- an on-board system (10) for supplying electrical energy to electrical loads (20) of the ship and
- power generators (9) for generating electrical energy for the at least one electric motor (2) and for the on-board system (10),
**characterised in that** the at least one electric motor (2) can also be operated as a generator, wherein during generator operation it can be connected to the on-board system (10) in order to feed electrical energy into the on-board system via an electrical line (11).

2. Ship (1) according to claim 1,
**characterised by** a converter (12) which is connected into the electrical line (11), and which supplies the electric motor (2) with electrical energy generated by the power generators (9) during engine operation and converts the electrical current generated by the electric motor (2) during generator operation into a current with the frequency of the on-board system (10).

3. Ship (1) according to claim 2,
**characterised in that** the converter (12) has a control and regulating system (16), by means of which the electric motor (2) can be so quickly switched from engine operation to generator operation by way of the converter (12) that during failure of a power generator (9), the electrical on-board energy can be maintained without a black-out of the on-board system (10), preferably without interruption.

4. Ship (1) according to claim 3,
**characterised by** an additional energy source (17), which, during the switchover of the electric motor (2) from engine operation to generator operation in order to maintain the on-board system energy, feeds electrical energy into the onboard system (10).

5. Ship (1) according to claim 4,
**characterised in that** the time taken to switch the electric motor (2) over from engine operation to generator operation and the dimensioning of the energy source (17) in respect of the energy which can be fed into the on-board system (10) at the time of switchover are attuned to one another such that on account of the energy fed into the on-board system (10) during the switchover, the voltage and frequency of the on-board system (10) do not fall below a respectively predetermined limit value.

6. Ship (1) according to claim 4 or 5,
**characterised in that** the converter is embodied as an intermediate DC circuit converter (12) and the energy source is a rotating reactive power machine (17) for generating reactive power for the on-board system (10).

7. Ship (1) according to claim 4 or 5,
**characterised in that** the converter is embodied as an intermediate DC circuit converter (41), and the energy source is an intermediate circuit capacitor (43) of the intermediate DC circuit (42).

8. Ship (1) according to one of claims 2 to 7,
**characterised in that** the converter (12) has a system-side and an engine-side current converter (13, 14) with in each case controllable current converter valves, and the control and regulating system (16) switches the electric motor (2) from engine operation to generator operation by changing the switch-on duration of the current converter valves.

9. Ship (1) according to one of claims 3 to 8,
**characterised in that** it has a shared control and regulating system (16) for the engine operation and generator operation of the electric motor (2).

10. Ship (1) according to one of claims 3 to 9, **characterised in that** the electric motor (2), the converter (12) and the control and regulating system (16) of the converter (12) are embodied such that the electric motor (2) can be switched from engine operation to power generator operation within less than 1 second, preferably within less than 500 ms.

11. Ship (1) according to one of the preceding claims,
**characterised in that** it is embodied as a frigate or a corvette.

## Revendications

1. Bâtiment (1) de navigation comprenant
- au moins un moteur (2) électrique comme machine principale de propulsion du bâtiment, le moteur (2) électrique entraînant un système (3) d'arbre qui est accouplé à une hélice marine,
- au moins une machine (5) à combustion interne pouvant être accouplée au système (3) d'arbre, notamment une turbine à gaz ou un ou plusieurs moteurs diesel, comme propulsion supplémentaire pour atteindre la vitesse la plus grande du bâtiment (1),
- un réseau de bord (10) pour l'alimentation en énergie électrique de consommateurs (20) électriques du bâtiment et
- des génératrices (9) pour la production d'énergie électrique pour le au moins un moteur (2) électrique et pour le réseau de bord (10),
**caractérisé en ce que** le au moins un moteur (2) électrique peut fonctionner aussi comme génératrice, dans lequel, en fonctionnement en génératrice, il peut être, pour injecter de l'énergie électrique dans le réseau de bord, relier au réseau de bord (10) par une ligne (11) électrique.

2. Bâtiment (1) de navigation suivant la revendication 1,
**caractérisé par** un convertisseur (12) qui est monté dans la ligne (11) électrique, qui alimente le moteur (2) électrique, en fonctionnement en moteur par de l'énergie électrique produite par les génératrices (9) et qui transforme le courant électrique produit par le moteur (2) électrique, en fonctionnement en génératrice, en un courant ayant la fréquence du réseau de bord (10).

3. Bâtiment (1) de navigation suivant la revendication 2,
**caractérisé en ce que** le convertisseur (12) a un système (16) de commande et de régulation, par lequel le moteur (2) électrique peut passer par l'intermédiaire du convertisseur (12) si rapidement du fonctionnement en moteur au fonctionnement en génératrice que, si une génératrice (9) tombe en panne, l'énergie électrique du réseau de bord peut être maintenue sans coupure de courant, de préférence sans interruption.

4. Bâtiment (1) de navigation suivant la revendication 3,
**caractérisé par** une source (17) d'énergie supplémentaire qui, pendant le passage en moteur (2) électrique du fonctionnement en moteur au fonctionnement en génératrice, injecte, pour le maintien de l'énergie du réseau de bord, de l'énergie électrique dans le réseau de bord (10).

5. Bâtiment (1) de navigation suivant la revendication 4,
**caractérisé en ce que** la durée du passage du moteur (2) électrique du fonctionnement à moteur au fonctionnement en génératrice et le dimensionnement de la source (17) d'énergie sont adaptées l'une à l'autre en ce qui concerne l'énergie pouvant être injectée dans le réseau de bord (10) pendant la durée du passage de manière à ce que, sur la base de l'énergie injectée dans le réseau de bord (10) pendant le passage, la tension et la fréquence du réseau de bord (10) ne deviennent pas inférieures à une valeur limite donnée à l'avance respectivement.

6. Bâtiment (1) de navigation suivant la revendication 4 ou 5,
**caractérisé en ce que** le convertisseur est constitué sous la forme d'un convertisseur (12) de circuit intermédiaire à courant continu et la source d'énergie est une machine (17) tournante à puissance réactive pour produire de la puissance réactive pour le réseau de bord (10).

7. Bâtiment (1) suivant la revendication 4 ou 5,
**caractérisé en ce que** le convertisseur est constitué sous la forme d'un convertisseur (41) de circuit intermédiaire à tension continue et la source d'énergie est un condensateur (43) du circuit intermédiaire (42) à tension continue.

8. Bâtiment (1) suivant l'une des revendications 2 à 7,
**caractérisé en ce que** le convertisseur (12) comporte un convertisseur (13) de courant du côté du réseau et un convertisseur (14) de courant du côté du moteur ayant respectivement des soupapes de convertisseur pouvant être commandées, et le système (16) de commande et de régulation fait passer le moteur (2) électrique du fonctionnement en moteur au fonctionnement en génératrice, en modifiant la durée d'ouverture des soupapes du convertisseur.

9. Bâtiment (1) de navigation suivant l'une des revendications 3 à 8,
**caractérisé en ce qu'**il a un système (16) commun de commande et de régulation pour le fonctionnement en moteur et pour le fonctionnement en génératrice du moteur (2) électrique.

10. Bâtiment (1) de navigation suivant l'une des revendications 3 à 9,
**caractérisé en ce que** le moteur (2) électrique, le convertisseur (12) et le système (16) de commande et de régulation du convertisseur (12) sont constitués de manière à pouvoir faire passer le moteur (2) électrique du fonctionnement en moteur au fonctionnement en génératrice en moins de 1 seconde, de préférence en moins de 500 ms.

11. Bâtiment (1) de navigation suivant l'une des revendications,
**caractérisé en ce qu'**il est constitué en frégate ou en corvette.
